(19) **Europäisches Patentamt** **European Patent Office** **Office européen des brevets**

(11) **EP 3 526 638 B1**

(12) **FASCICULE DE BREVET EUROPEEN**

(45) Date de publication et mention de la délivrance du brevet:
**18.06.2025 Bulletin 2025/25**

(21) Numéro de dépôt: **17777608.5**

(22) Date de dépôt: **06.10.2017**

(51) Classification Internationale des Brevets (IPC):
*G02B 27/00* *(2006.01)*

(52) Classification Coopérative des Brevets (CPC):
**G02B 27/0012;** G02B 27/0025

(86) Numéro de dépôt international:
**PCT/EP2017/075564**

(87) Numéro de publication internationale:
**WO 2018/069194 (19.04.2018 Gazette 2018/16)**

(54) **PROCEDE D'OPTIMISATION D'UNE ARCHITECTURE D'OBJECTIF INFRAROUGE ACHROMATISEE CORRIGEE DES DERIVES THERMIQUES**

OPTIMIERUNGSVERFAHREN DES ENTWURFS EINER ACHROMATISCHEN INFRAROTLINSE, DIE VON THERMISCHEN DRIFTEN ENTGEGENGESTELLT WIRD

METHOD FOR OPTIMISING THE DESIGN OF AN ACHROMATIC INFRARED LENS CORRECTED FROM THERMAL DRIFTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2016 FR 1601490**

(43) Date de publication de la demande:
**21.08.2019 Bulletin 2019/34**

(73) Titulaire: **Thales**
**92400 Courbevoie (FR)**

(72) Inventeurs:
• **DIAZ, Frédéric**
**42570 Saint Héand (FR)**
• **BURCKLEN, Marie-Anne**
**75015 Paris (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
EP-A1- 0 480 805    EP-A2- 1 380 872
FR-A1- 3 030 788

• JO?L ROLLIN ET AL: "New solutions and technologies for uncooled infrared imaging", PROCEEDINGS OF SPIE, vol. 8704, 11 June 2013 (2013-06-11), US, pages 870423, XP055386526, ISBN: 978-1-5106-1533-5, DOI: 10.1117/12.2015784
• EDWARD R DOWSKI ET AL: "Header for SPIE use Wavefront Coding: jointly optimized optical and digital imaging systems", 31 December 2013 (2013-12-31), XP055386531, Retrieved from the Internet <URL:https://pdfs.semanticscholar.org/dbe6/616e8fa747b04f3295110a5b39af04e6b2ed.pdf> [retrieved on 20170629]
• M. DIRK ROBINSON ET AL: "Joint digital-optical design of imaging systems for grayscale objects", SPIE - INTERNATIONAL SOCIETY FOR OPTICAL ENGINEERING. PROCEEDINGS, vol. 7100, 16 September 2008 (2008-09-16), US, pages 710011, XP055386537, ISSN: 0277-786X, ISBN: 978-1-5106-0753-8, DOI: 10.1117/12.797802

**Description**

Le domaine de l'invention est celui de la réalisation d'objectifs optiques dioptriques devant fonctionner dans des plages de longueur d'onde significatives et dans des plages thermiques importantes. L'application principale du procédé selon l'invention est le domaine de l'infrarouge thermique situé dans une plage de longueur d'onde comprise entre 7 et 13 micromètres. Cependant, les principes généraux mis en œuvre peuvent se transposer sans difficultés particulières à d'autres domaines spectraux.

Les objectifs dioptriques comportent une ou plusieurs lentilles optiques. On connait les effets des variations d'indice de réfraction des matériaux composant les lentilles en fonction de la longueur d'onde sur le chromatisme des images. Les variations thermiques provoquent des effets voisins qui sont induits par des changements des indices de réfraction, des variations des épaisseurs et des courbures des lentilles et des dilatations des entretoises.

Ces effets combinés génèrent des défocalisations qu'il convient de compenser. Une première méthode consiste à déplacer soit le plan de focalisation, soit une ou plusieurs lentilles de l'objectif en fonction de la température de façon à conserver le plan de focalisation. On comprend que cette méthode est complexe à mettre en œuvre et entraîne des surcoûts importants.

Une seconde méthode consiste à « athermaliser » la combinaison optique de façon que les variations thermiques soient sans effet sur la qualité optique de l'image.

Pour assurer l'athermalisation optique d'un objectif à focale fixe réfractif, opérant sur une bande spectrale large, il faut combiner trois conditions qui sont :

- L'annulation du chromatisme, c'est-à-dire réaliser la fusion des positions axiales des foyers aux longueurs d'onde extrêmes ;
- La compensation des dérives thermiques, la position du plan focal ne doit pas changer en température ;
- Le respect de la valeur de la focale.

L'article « New solutions and technologies for uncooled infrared imaging de J. Rollin, F. Diaz, C. Fontaine, B. Loiseaux, M.-S. L. Lee, C. Clienti, F. Lemonnier, X. Zhang, L. Calvez. SPIE 2013 Defense and Security Sensing. Baltimore » propose diverses solutions techniques permettant d'auto-athermaliser un objectif dans le respect de ces conditions. La publication "Joint digital-optical design of imaging systems for greyscale objects" par M.D. Robinson et al, International Society for Optical Engineering, Vol. 7100, pages 710011 à 710020 décrit un procédé de calcul et d'optimisation d'une architecture d'objectif optique particulièrement intéressant.

D'une façon générale, on démontre qu'il faut utiliser soit trois matériaux différents, soit deux matériaux différents et un composant à profil diffractif. Ce dernier composant présente l'avantage d'être très dispersif chromatiquement et, à l'inverse, est peu sensible aux dérives thermiques. L'utilisation de trois matériaux complique la combinaison optique et l'utilisation de composants à profil diffractif entraîne des pertes en transmission qui peuvent être importantes et l'apparition conjointe d'images parasites.

Dans la bande de l'infrarouge thermique comprise entre 7 et 13 $\mu$m, l'utilisation du germanium permet de simplifier ces problèmes. En effet, le germanium présente une très faible dispersion chromatique. Pour des objectifs en germanium en deçà d'une certaine valeur de focale, il n'est plus nécessaire de prévoir un profil diffractif ou un second matériau pour corriger le chromatisme axial, car celui-ci est suffisamment faible. De plus, l'indice de réfraction du germanium est élevé, voisin de 4. Pour une puissance optique donnée, les surfaces optiques sont donc moins cambrées et les aberrations géométriques sont plus faibles dans la mesure où les incidences sont réduites. A l'inverse, ce matériau est sensible aux variations thermiques et possède un dn/dT conséquent, ce qui correspond à un faible nombre d'Abbe thermique, de sorte que les objectifs en germanium associent souvent un mouvement axial de groupe ou de lentilles pour conserver la position du foyer lorsque température varie.

On sait également que l'utilisation du codage de pupille permet de réduire notablement les aberrations. Le principe général s'appuie sur la modification de la loi de phase dans la pupille d'un objectif en modifiant certains ou l'ensemble des éléments optiques et/ou en insérant un filtre de phase passif au voisinage de cette pupille. Cela permet notamment d'augmenter la profondeur de champ et/ou d'homogénéiser la qualité dans le champ d'un système optique. Le filtre de phase a pour but d'éliminer les passages par zéro des fonctions de transfert de modulation ou « FTM » et rend la réponse de l'optique quasi stationnaire en fonction de la défocalisation et aussi dans le champ. Ce filtre abaisse certes les niveaux moyens de la FTM mais il permet des traitements de déconvolution plus robustes, puisqu'il n'y a plus de passages par zéros, en restaurant les performances optiques nominales. Ces principes basés sur l'utilisation d'une lame de phase sont connus depuis les années 1990. On se reportera notamment au brevet US 8 107 705 intitulé « Systems and methods for minimizing aberrating effects in imaging systems » pour des informations complémentaires sur ce sujet. Le traitement d'image peut être effectué au niveau d'un capteur numérique ou au niveau d'un écran recevant une vidéo, comme le suggère le brevet FR 2 964 756 intitulé « Système de visualisation à filtre de correction ». On notera également que le codage de pupille permet, dans certains cas, la simplification des architectures optiques, en réduisant électroniquement le niveau de certaines aberrations telles que l'astigmatisme et la courbure, défauts qui s'apparentent à une défocalisation.

L'utilisation du codage de pupille, notamment en infrarouge, pour compenser les dérives de position du foyer en température est aussi évoquée dans l'art antérieur. La défocalisation est en effet une aberration comme les autres et l'on conçoit aisément que, si l'on trouve un moyen d'augmenter la profondeur de champ, ce même moyen peut être aussi utilisé pour désensibiliser une combinaison en température. On trouvera des informations sur cette utilisation dans les documents suivants : « Wavefront Coding: jointly optimized optical and digital imaging systems » de Edward R. Dowski Jr, Robert H. Cormacka, Scott D. Saramab. Article SPIE ; « Infrared Imaging Passive Thermal Compensation Via a Simple Mask » de Shay Elmalem and Emanuel Marom, Romanian Reports in Physics, Vol. 65, No. 3, P. 700-710, 2013 ; "Wavefront Coding for Athermalization of Infrared Imaging Systems", de . Gonzalo Muyo, Andrew R. Harvey. Proc. Of SPIE Vol. 5612 ; « Conception conjointe de l'optique et du traitement d'image appliquée à l'athermalisation d'un objectif infrarouge. » de M.-A. Burcklen et al. Journées JIONC 2016. 3° journée thématique du Club Calcul Optique 2016 et « Joint digital-optical design of imaging systems for grayscale objects" de. M. Dirk Robinson and David G. Stork. Proc. Of the 2008 SPIE European Optical Design Conference, 2008. Site de la Société Ricoh Innovations.

Par ailleurs, une optique n'a pas nécessairement besoin d'être parfaite lorsqu'elle est utilisée avec un capteur qui a forcément une certaine résolution. Une certaine dégradation de la FTM est donc tolérable et reste sans conséquences sur la qualité de l'image finale.

Le procédé de calcul et d'optimisation de l'architecture d'un objectif optique selon l'invention prend en compte ces différents éléments pour déterminer une architecture simple achromatisée et athermalisée dans des plages de longueurs d'onde et de température qui peuvent être importantes. Plus précisément, l'invention a pour objet un procédé effectué par ordinateur de calcul et d'optimisation d'une architecture d'objectif optique de focale déterminée et destiné à fonctionner dans une plage de longueurs d'onde déterminées et dans une gamme de températures déterminées, caractérisé en ce que ledit procédé comporte les étapes suivantes :

- Etape 1 : Estimation du seuil de chromatisme axial acceptable et de la défocalisation thermique acceptable ;
- Etape 2 : Mise en place d'une combinaison optique dans le domaine paraxial de type « Petzval » comportant deux lentilles convergentes réalisées dans un premier matériau ;
- Etape 3 : Première optimisation de la combinaison optique pour une première pluralité N de longueurs d'onde à une température constante de référence et une seconde pluralité M de températures à une longueur d'onde constante de référence ;
- Etape 3bis : Si le résultat de cette première optimisation donne une combinaison optique dont le chromatisme axial résiduel est supérieur au seuil de chromatisme acceptable ou dont la défocalisation thermique est supérieure à une défocalisation thermique déterminée, fonction de la défocalisation thermique acceptable, dédoublement d'une des lentilles de la combinaison optique et/ou changement du premier matériau d'une des lentilles par un second matériau et/ou ajustement du tirage et de l'encombrement de l'objectif optique et retour à l'étape 3 ;
- Etape 4 : Si le résultat de cette première optimisation donne une combinaison optique dont le chromatisme axial résiduel est inférieur ou égal au seuil de chromatisme acceptable et dont la défocalisation thermique est inférieure à la défocalisation thermique déterminée, seconde optimisation de la combinaison optique pour la première pluralité de longueurs d'onde et pour chaque température appartenant à la seconde pluralité de températures.

Avantageusement, la seconde optimisation de la combinaison optique est précédée de la mise en place d'un filtre de phase.

Avantageusement, la plage de longueurs d'onde est comprise entre 7 et 13 microns et le premier matériau est du germanium.

Avantageusement, lorsqu'une des lentilles de la combinaison optique comporte un second matériau, la variation d'indice optique de ce second matériau en fonction de la température est au moins trois fois inférieure à celle du germanium.

En résumé, le procédé de calcul et d'optimisation de l'architecture d'un objectif optique selon l'invention consiste à laisser un chromatise axial résiduel pour diminuer les dérives thermiques.

L'invention ne concerne pas un système de captation d'images comportant un objectif optique calculé selon le procédé de calcul et d'optimisation précédent, ledit système de captation d'images comportant également un capteur photosensible disposé au foyer dudit objectif optique et des moyens électroniques réalisant un traitement d'images issues dudit capteur, caractérisé en ce que ledit traitement d'images consiste essentiellement à réaliser sur l'image numérique captée par le capteur photosensible un filtrage par un filtre de déconvolution, ledit filtre de déconvolution étant un filtre de Wiener calculé pour au moins une température, au moins une pondération spectrale et au moins un champ de l'image.

Avantageusement, le filtre de déconvolution peut être appliqué dans l'espace de Fourier ou dans l'espace réel.

Avantageusement, la température est la température moyenne de la scène représentée par l'image.

Avantageusement, le filtre de Wiener est moyenné sur la seconde pluralité de température.

Avantageusement, le filtre de Wiener est moyenné sur une pluralité de champs de l'image.

Avantageusement, la pondération spectrale dépend du contenu spectral de l'image traitée ou du champ de l'image traitée.

Avantageusement, plusieurs filtres de Wiener correspondant à des pondérations spectrales différentes sont stockés et sont sélectionnables par l'utilisateur pour optimiser l'image traitée en fonction du contenu spectral de la scène.

Avantageusement, l'image est divisée en plusieurs zones sur lesquelles l'utilisateur peut appliquer des filtres de pondérations spectrales différents

Avantageusement, dans un mode automatique, le filtre de Wiener moyen est asservi à une information de température pour assurer une pondération spectrale représentative de la température de scène.

Avantageusement, dans un mode manuel, le traitement d'image peut être débrayé par l'utilisateur.

L'invention sera mieux comprise et d'autres avantages apparaîtront à la lecture de la description qui va suivre donnée à titre non limitatif et grâce aux figures annexées parmi lesquelles :

La figure 1 représente les différentes étapes du procédé de calcul et d'optimisation de l'architecture d'un objectif optique selon l'invention ;

Les figures 2, 3 et 4 représentent les différentes configurations d'un doublet optique séparé ;

La figure 5 représente un triplet optique selon l'invention ;

La figure 6 représente un système de captation d'images selon l'invention.

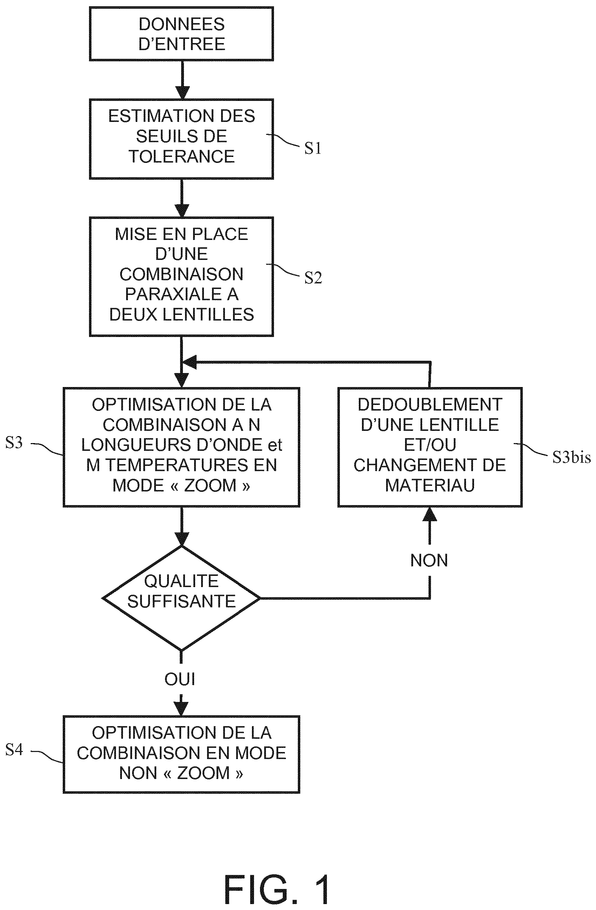

A titre d'exemple, la figure 1 représente les différentes étapes du procédé de calcul et d'optimisation de l'architecture d'un objectif optique selon l'invention. Ces étapes sont notées S1, S2, S3, S3bis et S4 sur la figure 1. Ces différentes étapes sont réalisées au moyen d'un logiciel de conception optique. Ces logiciels sont bien connus de l'homme du métier. Compte-tenu que l'objectif est de réaliser une combinaison optique ne comportant que deux ou trois lentilles et, par conséquent, un nombre de paramètres réduits, la phase d'optimisation ne pose aucun problème particulier bien qu'elle se fasse simultanément pour plusieurs longueurs d'onde et plusieurs températures.

Un certain nombre de données d'entrée sont nécessaire pour commencer le procédé. Ces données relèvent d'un cahier des charges classiques de définition d'un objectif optique. Ce sont essentiellement :

- La gamme de longueurs d'onde. Dans ce qui suit, la gamme de longueurs d'onde est située dans la bande de rayonnement infrarouge comprise entre 7 et 13 microns. On peut adapter le procédé à d'autres gammes de longueur d'onde ;
- La gamme de températures. A titre d'exemple, les variations de température peuvent être de $\pm$ 40 degrés autour d'une température moyenne ;
- La focale, l'ouverture, l'encombrement et le champ de l'objectif. A titre indicatif, la focale peut être d'environ 50 mm, l'ouverture de F/1.4, l'encombrement de 100 mm et la diagonale du champ image inférieure à 20 mm ;
- La qualité de l'objectif que l'on peut définir par sa courbe de FTM en fonction de la fréquence. Cette qualité est essentiellement fonction de la résolution du capteur et est calculée en fonction de la taille des pixels qui le composent. Cette taille est généralement de l'ordre de 10 à 20 microns pour une application dans la gamme de longueurs d'onde 7-13 $\mu$m infrarouge fonctionnant avec des systèmes non refroidis.

Dans la première étape du procédé S1, les données précédentes étant connues, il est nécessaire d'estimer le seuil de chromatisme acceptable et la défocalisation thermique acceptable. Le procédé revient finalement à laisser un chromatisme axial résiduel pour diminuer les dérives thermiques.

Les deux défauts n'ont généralement pas le même seuil. La défocalisation correspondant au chromatisme, c'est-à-dire la distance séparant les foyers associés aux longueurs d'onde extrêmes, possède un seuil d'acceptation supérieur à celui d'une défocalisation pure car les écarts des foyers en fonction de la longueur d'onde par rapport à une référence sont progressifs. Ces deux valeurs dépendent de la focale, de l'ouverture et de la qualité de l'objectif définies précédemment. En pratique, le résidu de chromatisme et les dérives thermiques ne doivent pas produire d'inversions de contraste aux fréquences spatiales d'intérêt de la FTM de l'objectif, c'est-à-dire que les courbes de FTM ne doivent pas passer par zéro.

Dans une seconde étape du procédé S2, on met en place une combinaison optique représentative des différents paramètres de l'objectif dans le domaine paraxial. Dans cette étape, on considère que l'objectif est constitué de deux lentilles minces réalisées dans le même matériau. Dans le domaine de longueur d'onde infrarouge, ce matériau est le germanium. En effet, comme il a été dit précédemment, ce matériau possède plusieurs propriétés remarquables dont un indice optique élevé et un chromatisme faible.

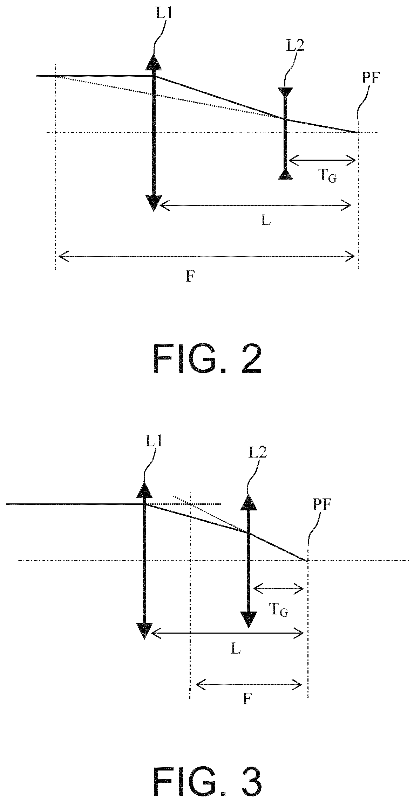

Comme on le voit sur les figures 2, 3 et 4, il existe trois types de combinaison optique comportant deux lentilles minces permettant de réaliser un objectif optique. Ces lentilles sont notées L1 et L2. Sur ces trois figures sont indiqués le plan focal PF, la distance focale F de l'objectif, l'encombrement total L de l'objectif, c'est-à-dire la distance séparant la première lentille L1 du plan focal PF, et le tirage $T_G$ qui correspond à la distance séparant la seconde lentille du plan focal PF. On démontre que, connaissant la focale F de l'objectif, la distance D séparant les deux lentilles L1 et L2 et le tirage $T_G$, les deux focales F1 et F2 des deux lentilles vérifient les relations suivantes :

$$F1 = \frac{D.}{1 - \dfrac{T_G}{F}} \quad \text{et} \quad F2 = \frac{T_G.D.}{D - F + T_G}$$

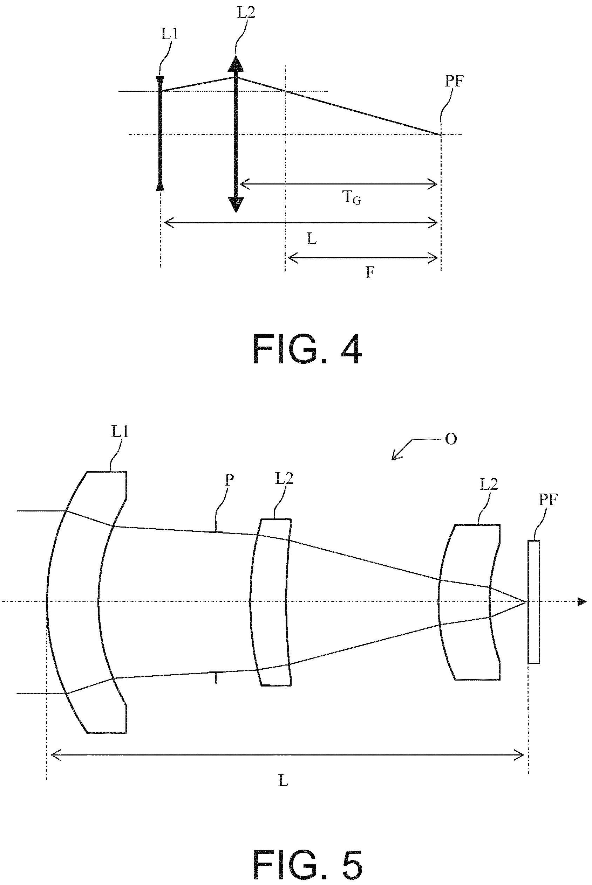

Le premier type de combinaison représenté en figure 2 comporte une lentille L1 convergente et une lentille L2 divergente. Cette combinaison est appelée téléobjectif. Le second type de combinaison représentée en figure 3 comporte une lentille L1 convergente et une lentille L2 également convergente. Cette combinaison est appelée Petzval. Le troisième type de combinaison représentée en figure 4 comporte une lentille L1 divergente et une lentille L2 convergente. Cette combinaison est appelée rétrofocus.

On démontre que, les lentilles étant faite dans le même matériau, la meilleure combinaison possible est celle de Petzval.

Si l'on note $\alpha$ le coefficient de dilatation des structures et $\eta$ le nombre d'Abbe thermique qui s'exprime en fonction de l'indice de réfraction $N_0$, de sa dérivée en fonction de la température $\dfrac{\partial N_0}{\partial T}$ et du coefficient de dilatation du substrat $\alpha_a$, on démontre que l'on a la relation suivante :

$$\eta = \frac{1}{\dfrac{\partial N_0}{\partial T} \cdot \dfrac{1}{(N_0 - 1)} - \alpha_a}$$

Dans ce cas, pour une variation de température $\Delta T$, la défocalisation thermique $\varepsilon(\Delta T)$ vaut :

$$\varepsilon(\Delta T) = -\Delta T \cdot \left[ \frac{1}{\eta} + \alpha \right] \cdot \left[ \frac{(F - T_G)^2}{D} + T_G \right]$$

L'écart aberrant $\Delta_{PV}$ lié au chromatisme, c'est-à-dire la distance maximale séparant les foyers aux longueurs d'onde extrêmes de la plage de longueurs d'onde, s'écrit, en fonction du nombre d'Abbe $v$ et du nombre d'ouverture N :

$$\Delta_{PV} = \frac{1}{8.N^2.v} \cdot \left[ \frac{(F - T_G)^2}{D} + T_G \right]$$

Si on note R le facteur de réduction du chromatisme et des variations thermiques par rapport à la lentille simple unique de même focale, ce rapport vaut :

$$R = 1 - \frac{(F - T_G).(L - F)}{F.(L - T_G)}$$

Pour minimiser à la fois les dérives thermiques et le chromatisme, à focale F donnée, il faut donc augmenter l'encombrement L et diminuer le tirage $T_G$. Cette démarche au premier ordre permet d'avoir aussi un aperçu de la sensibilité de la combinaison optique aux aberrations géométriques par l'examen des puissances optiques des lentilles. Dès ce stade, les valeurs du Petzval peuvent d'ailleurs être calculées quand les matériaux des lentilles sont fixés.

Dans une troisième étape S3 du procédé, on réalise une première optimisation de la combinaison optique pour une première pluralité N de longueurs d'onde à une température constante de référence $T_0$ et une seconde pluralité M de températures à une longueur d'onde constante de référence $\lambda_0$. L'optimisation est donc réalisée pour N + M - 1 configurations, chaque configuration étant associée à une température et à une longueur d'onde. Sur la figure 1, ce mode d'optimisation est appelé mode « Zoom ». Le tirage est optimisé pour chaque configuration. On peut donc avoir des positions différentes entre deux températures ou deux longueurs d'onde. Ceci permet, lors de cette phase d'optimisation, de laisser un certain chromatisme et une certaine dérive thermique. Cette phase d'optimisation consiste essentiellement à déterminer les courbures des différents dioptres composant les deux lentilles initiales. Les dioptres peuvent être sphériques, asphériques ou diffractifs.

Il est à noter que, dans cette étape, le seuil de défocalisation thermique pris en compte est une fonction du seuil de défocalisation thermique acceptable. Ce seuil de défocalisation thermique dit « déterminé » peut être choisi plus élevé que le seuil de défocalisation thermique acceptable dans la mesure où la défocalisation est optimisée dans la quatrième étape. D'une façon générale, le seuil de défocalisation déterminé peut être trois à cinq fois supérieur au seuil de défocalisation acceptable.

Le nombre de configurations doit être suffisant pour couvrir tout le spectre et toute la gamme de températures. En pratique, pour des focales fixes utilisées dans la bande spectrale comprise entre 8 et 12 microns, six à huit configurations suffisent. Trois configurations sont définies à une longueur d'onde constante pour trois températures différentes et entre trois et cinq configurations à une température de référence constante pour trois à cinq longueurs d'onde différentes.

Les écarts de tirage en fonction de la température et de la longueur d'onde sont bornés.

A la fin de cette troisième étape du procédé, deux cas de figure sont possible. Si le résultat de cette première optimisation donne une combinaison optique dont le chromatisme résiduel est supérieur au seuil de chromatisme acceptable ou dont la défocalisation thermique est supérieure à la défocalisation thermique acceptable, on ajoute une troisième étape bis qui consiste à modifier la combinaison optique paraxiale initiale. Si le résultat de cette première optimisation donne une combinaison optique dont le chromatisme résiduel est inférieur au seuil de chromatisme acceptable et dont la défocalisation thermique est inférieure à la défocalisation thermique acceptable, on passe à la quatrième étape du procédé.

Dans le cas où les seuils ne sont pas atteints, dans une troisième étape dite 3bis du procédé, on retouche la combinaison optique initiale paraxiale. Pour améliorer les performances de l'objectif, deux principes peuvent être mis en œuvre. Un premier principe consiste à ajuster les encombrements pour désensibiliser la combinaison thermique. On peut augmenter la longueur L de l'objectif au maximum du volume alloué et/ou diminuer le tirage $T_G$.

Le second principe consiste à dédoubler la première lentille : le groupe frontal comprend alors deux lentilles de puissances positives. Ce doublet comprend une première lentille frontale en germanium et une lentille dans un matériau plus dispersif chromatiquement mais dérivant moins en thermique. A titre d'exemple de ce type de matériau, on citera le matériau de la société Schott connu sous la référence « IRG25 », le séléniure de zinc de formule chimique « ZnSe », les matériaux à base de chalcogénures comme le « GASIR1 », le sulfure de zinc de formule chimique « ZnS ». On diminue alors les dérives thermiques au détriment du chromatisme axial car la lentille dans le matériau dispersif est de puissance positive. On obtient alors un triplet optique.

Les deux principes peuvent, bien sûr, se cumuler.

Connaissant les différents coefficients de dilatation des matériaux utilisés ainsi que leurs variations d'indice optique en fonction de la longueur et de la température, on calcule alors, pour une variation de température $\Delta T$, la défocalisation thermique $\varepsilon(\Delta T)$ et l'écart aberrant $\Delta_{PV}$ lié au chromatisme avec les mêmes définitions que précédemment.

On peut alors recommencer la troisième étape du procédé avec cette nouvelle configuration paraxiale. Le choix des températures et des longueurs d'onde reste le même.

A titre d'exemple, la figure 5 représente la combinaison optique d'un objectif O issu de cette troisième étape d'optimisation. Il comporte trois lentilles notées L1, L2 et L3. La première lentille L1 et la troisième lentille L3 sont en germanium. La lentille L2 est en IRG25. La focale de l'objectif O est de 50 mm. Son encombrement est de 97 mm. La pupille P se situe entre les deux premières lentilles L1 et L2. Le tirage est de 6 mm. Les focales respectives des trois lentilles sont les suivantes :

| | |
|---|---|
| Focale lentille L1 : | 278 mm |
| Focale lentille L2 : | 68 mm |
| Focale lentille L3 : | 70 mm |

Avec cette optique, le chromatisme axial dans la bande de longueurs d'onde située entre 8 et 12 microns vaut 130 $\mu$m et l'écart de défocalisation dans la plage de température située entre 0 et 40 degrés vaut 84 $\mu$m.

Dans une quatrième étape, lorsque le résultat de la première optimisation donne une combinaison optique dont le chromatisme résiduel est inférieur ou égal au seuil de chromatisme acceptable et dont la défocalisation thermique est inférieure à la défocalisation thermique déterminée, on réalise une seconde optimisation de la combinaison optique pour la première pluralité N de longueurs d'onde et pour chaque température appartenant à la seconde pluralité M de températures. L'optimisation porte donc, cette fois sur N.M configurations. Sur la figure 1, ce mode d'optimisation est appelé mode « Non Zoom ». A titre d'exemple, en conservant les valeurs précédentes, c'est-à-dire le nombre N compris entre trois et cinq et le nombre M égal à trois, on optimise donc pour un nombre de configurations compris entre neuf et quinze.

Dans le cas d'une utilisation en bande large, le chromatisme peut rendre la qualité d'image stationnaire avec la défocalisation et la mise en place d'un filtre de phase n'est alors plus nécessaire : c'est ainsi le cas de la combinaison de la figure 5 qui ne nécessite plus de filtre de phase. Dans les autres cas, on peut ajouter un filtre de phase dans la combinaison optique, généralement au niveau de la pupille de l'objectif.

On démontre qu'en choisissant des filtres de phase de révolution simples, des facteurs de trois à cinq peuvent être gagnés sur les profondeurs de champ avec un codage de pupille. L'article « New solutions and technologies for uncooled infrared imaging » J. Rollin, F. Diaz, C. Fontaine, B. Loiseaux, M-.S. L. Lee, C. Clienti, F. Lemonnier, X. Zhang, L. Calvez. SPIE 2013 Defense and Security Sensing. Baltimore donne des précisions sur ce point. Par conséquent, si la première optimisation est faite avec un seuil de défocalisation thermique plus élevé que le seuil de défocalisation thermique acceptable, l'utilisation d'un filtre de phase permet d'obtenir ce seuil de défocalisation thermique acceptable.

Dans le cas où la fonction filtre de phase est assurée par le chromatisme résiduel uniquement, les gains sont similaires.

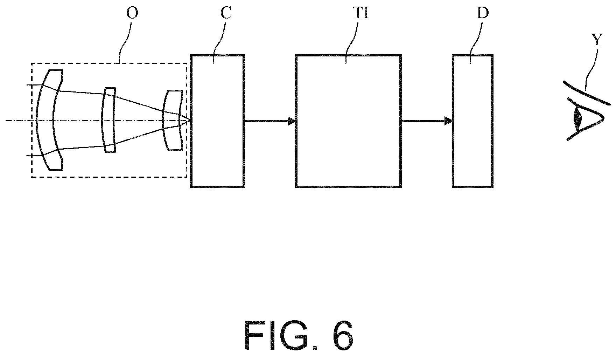

Le simple ajout d'une fonction de phase dans la combinaison optique qu'elle soit assurée par le chromatisme ou un composant spécifique ne permet pas d'obtenir les meilleures performances possibles. En utilisation, l'objectif O obtenu par le procédé selon l'invention est intégré dans un système de captation d'images représenté en figure 6. Celui-ci comporte également un capteur photosensible C disposé au foyer de l'objectif optique et des moyens électroniques TI réalisant un traitement d'images issues du ce capteur. Au final, l'observateur Y voit l'image traitée sur un dispositif de visualisation D.

Le traitement d'images consiste essentiellement à réaliser sur l'image numérique captée par le capteur photosensible un filtrage par un filtre de déconvolution, dans l'espace de Fourier ou dans l'espace réel. On trouvera des informations sur cette technique, par exemple, dans la demande publiée FR 3 029 053 intitulée « Système de captation d'images à bas niveau de lumière comprenant une optique comportant un filtre de phase et/ou d'amplitude ».

Généralement, le filtre appliqué dans ce type de traitement d'images est un filtre dit de Wiener $h(\mu, v)$. Il vérifie la relation suivante :

$$h(\mu,v) = \frac{d(\mu,v).}{|d(\mu,v)|^2 + \dfrac{S_N}{S_O}}$$

avec

$d(\mu, v)$ Transformée de Fourier de la réponse percussionnelle de l'objectif dans un plan $(\mu, v)$

$S_N$    Densité spectrale de bruit
$S_O$    Densité spectrale de l'objet

Dans le cas présent, le filtre de déconvolution de Wiener est calculé pour au moins une température, au moins une pondération spectrale et au moins un champ de l'image.

Plus généralement, le filtre de Wiener utilisé est de la forme :

$$\partial(v) = \frac{\dfrac{1}{M.F}.\sum\limits_{p=1}^{M}\sum\limits_{q=1}^{F}\tilde{h}_{p,q}(v).S_{OO}(v)}{\dfrac{1}{M.F}.\sum\limits_{p=1}^{M}\sum\limits_{q=1}^{F}\left|\tilde{h}_{p,q}(v)\right|^2.S_{OO}(v) + S_{bb}(v)}$$

avec

M    Nombre de températures retenues pour l'optimisation

F    Nombre de champs optiques retenus pour l'optimisation

$\tilde{h}_{p,q}(v)$    Fonction de transfert optique pour la température p et le champ q
$S_{OO}(v)$    Densité spectrale de puissance de l'objet
$S_{bb}(v)$    Densité spectrale de puissance de bruit

Dans le cas où la combinaison optique présente une qualité homogène dans le champ, ou dans le cas où seule la qualité optique sur l'axe compte, on peut se contenter de la réponse sur l'axe uniquement dans la formule définissant le filtre de Wiener moyen. Dans ce cas, le paramètre F est égal à l'unité dans la formule précédente. C'est le cas notamment de la combinaison optique de la figure 5.

Pour couvrir un plus grand nombre de cas, on peut prévoir plusieurs filtres de Wiener moyens associés à différentes pondérations spectrales en y intégrant les FTM optiques associées à ces spectres. Par exemple, on peut retenir :

- Un filtre correspondant à une réponse spectrale de scène en température basse (-30°C)

- Un filtre correspondant à une réponse spectrale de scène en température moyenne (+20°C)
- Un filtre correspondant à une réponse spectrale de scène en température haute (+70°C)

On peut aussi envisager des filtres mono-spectraux pris, par exemple, aux longueurs d'onde de 8, 10 et 12 $\mu$m.

De plus, on peut, dans une version plus élaborée, envisager un traitement différentié en fonction de la zone dans l'image. Le traitement de chaque zone peut être ajusté par l'utilisateur qui optimise donc la correction numérique en fonction de l'émissivité et de la température moyennes de la zone. Le choix de la table de correction peut également utiliser l'information de température de l'objectif fournie par un capteur intégré au système d'imagerie.

Enfin, ces différents traitements de l'image peuvent être appliqués de façon automatique ou débrayés par un utilisateur.

**Revendications**

1. Procédé effectué par ordinateur de calcul et d'optimisation d'une architecture d'objectif optique (O) de focale (F) déterminée et destiné à fonctionner dans une plage de longueurs d'onde déterminée et dans une gamme de températures déterminée, **caractérisé en ce que** ledit procédé comporte les étapes suivantes :

   - Etape 1 : Estimation du seuil de chromatisme axial ($\Delta_{PV}$) acceptable et de la défocalisation thermique ($\varepsilon(\Delta T)$) acceptable ;
   - Etape 2 : Mise en place d'une combinaison optique dans le domaine paraxial de type « Petzval » comportant deux lentilles convergentes (L1, L2) réalisées dans un premier matériau ;
   - Etape 3 : Première optimisation de la combinaison optique pour une première pluralité (N) de longueurs d'onde à une température constante de référence et une seconde pluralité (M) de températures à une longueur d'onde constante de référence ;
   - Etape 3bis : Si le résultat de cette première optimisation donne une combinaison optique dont le chromatisme axial résiduel est supérieur au seuil de chromatisme acceptable ou dont la défocalisation thermique est supérieure à une défocalisation thermique déterminée, fonction de la défocalisation thermique acceptable, dédoublement d'une des lentilles de la combinaison optique et/ou changement du premier matériau d'une des lentilles par un second matériau et/ou ajustement du tirage et de l'encombrement de l'objectif optique et retour à l'étape 3 ;
   - Etape 4 : Si le résultat de cette première optimisation donne une combinaison optique dont le chromatisme axial résiduel est inférieur ou égal au seuil de chromatisme acceptable et dont la défocalisation thermique est inférieure à la défocalisation thermique déterminée, seconde optimisation de la combinaison optique pour la première pluralité de longueurs d'onde et pour chaque température appartenant à la seconde pluralité de température.

2. Procédé de calcul et d'optimisation selon la revendication 1, **caractérisé en ce que** la seconde optimisation de la combinaison optique est précédée de la mise en place d'un filtre de phase dans la combinaison optique.

3. Procédé de calcul et d'optimisation selon la revendication 1, **caractérisé en ce que** la plage de longueur d'onde est comprise entre 7 et 13 microns et que le premier matériau est du germanium.

4. Procédé de calcul et d'optimisation selon la revendication 3, **caractérisé en ce que**, lorsqu'une des lentilles de la combinaison optique comporte un second matériau, la variation d'indice optique de ce second matériau en fonction de la température est au moins trois fois inférieure à celle du germanium.

## Patentansprüche

1. Computergestütztes Verfahren zur Berechnung und Optimierung einer Architektur eines optischen Objektivs (O) mit festgelegter Brennweite (F), und das dazu vorgesehen ist, in einem bestimmten Wellenlängenbereich und in einem bestimmten Temperaturbereich betrieben zu werden, **dadurch gekennzeichnet, dass** das Verfahren die folgenden Schritte enthält:

    - Schritt 1: Schätzung des Schwellenwerts einer akzeptablen axialen chromatischen Aberration ($\Delta_{PV}$) und der akzeptablen thermischen Defokussierung ($\varepsilon(\Delta T)$);
    - Schritt 2: Einrichtung einer optischen Kombination im paraxialen Bereich vom Typ "Petzval" mit zwei konvergenten Linsen (L1, L2), die aus einem ersten Material hergestellt sind;
    - Schritt 3: Erste Optimierung der optischen Kombination für eine erste Vielzahl (N) von Wellenlängen bei einer konstanten Referenztemperatur und eine zweite Vielzahl (M) von Temperaturen bei einer konstanten Referenzwellenlänge;
    - Schritt 3bis: Wenn das Ergebnis dieser ersten Optimierung eine optische Kombination ergibt, deren axiale chromatische Restaberration über dem Schwellenwert der akzeptablen chromatischen Aberration liegt oder deren thermische Defokussierung über einer bestimmten thermischen Defokussierung liegt, die von der akzeptablen thermischen Defokussierung abhängt, Aufspaltung einer der Linsen der optischen Kombination und/oder Austausch des ersten Materials einer der Linsen durch ein zweites Material und/oder Anpassung des Auflagemaßes und der Abmessungen des optischen Objektivs und Rückkehr zu Schritt 3;
    - Schritt 4: Wenn das Ergebnis dieser ersten Optimierung eine optische Kombination ergibt, deren axiale chromatische Restaberration kleiner oder gleich dem Schwellenwert der akzeptablen chromatischen Aberration ist und deren thermische Defokussierung kleiner als die bestimmte thermische Defokussierung ist, zweite Optimierung der optischen Kombination für die erste Vielzahl von Wellenlängen und für jede Temperatur aus der zweiten Vielzahl von Temperaturen.

2. Verfahren zur Berechnung und Optimierung nach Anspruch 1, **dadurch gekennzeichnet, dass** der zweiten Optimierung der optischen Kombination die Einrichtung eines Phasenfilters in der optischen Kombination vorausgeht.

3. Verfahren zur Berechnung und Optimierung nach Anspruch 1, **dadurch gekennzeichnet, dass** der Wellenlängenbereich zwischen 7 und 13 Mikrometern liegt und das erste Material Germanium ist.

4. Verfahren zur Berechnung und Optimierung nach Anspruch 3, **dadurch gekennzeichnet, dass**, wenn eine der Linsen der optischen Kombination ein zweites Material enthält, die Änderung des Brechungsindexes dieses zweiten Materials in Abhängigkeit von der Temperatur mindestens dreimal geringer als diejenige von Germanium ist.

## Claims

1. A computer-implemented method for computing and optimising an optical objective lens architecture (O) with a determined focal length (F) and intended to operate within a determined wavelength range and within a determined temperature range, **characterised in that** said method contains the following steps of:

    - Step 1: estimating the acceptable axial chromatic aberration threshold ($\Delta_{PV}$) and the acceptable thermal defocusing ($\varepsilon(\Delta T)$);
    - Step 2: setting an optical combination in the paraxial domain of the "Petzval" type containing two convergent lenses (L1, L2) made from a first material;

- Step 3: first optimisation of the optical combination for a first plurality (N) of wavelengths at a constant reference temperature and a second plurality (M) of temperatures at a constant reference wavelength;

- Step 3bis: if the result of this first optimisation yields an optical combination whose residual axial chromatic aberration is greater than the acceptable chromatic aberration threshold or whose thermal defocusing is greater than a determined thermal defocusing, depending on the acceptable thermal defocusing, duplicating one of the lenses of the optical combination and/or replacing the first material of one of the lenses with a second material and/or adjusting the draw and the bulk of the optical objective lens and returning to step 3;

- Step 4: if the result of this first optimisation yields an optical combination whose residual axial chromatic aberration is less than or equal to the acceptable chromatic aberration threshold and whose thermal defocusing is less than the determined thermal defocusing, second optimisation of the optical combination for the first plurality of wavelengths and for each temperature belonging to the second plurality of temperatures.

2. The computation and optimisation method according to claim 1, **characterised in that** the second optimisation of the optical combination is preceded by setting a phase filter in the optical combination.

3. The computation and optimisation method according to claim 1, **characterised in that** the wavelength range ranges between 7 and 13 microns and the first material is germanium.

4. The computation and optimisation method according to claim 3, **characterised in that**, when one of the lenses of the optical combination contains a second material, the optical index variation of this second material as a function of the temperature is at least three times lower than that of germanium.

DONNEES
D'ENTREE

ESTIMATION DES
SEUILS DE
TOLERANCE ⟍ S1

MISE EN PLACE
D'UNE
COMBINAISON ⟍ S2
PARAXIALE A
DEUX LENTILLES

S3 ⟍ OPTIMISATION DE LA
COMBINAISON A N
LONGUEURS D'ONDE et
M TEMPERATURES EN
MODE « ZOOM »

DEDOUBLEMENT
D'UNE LENTILLE
ET/OU
CHANGEMENT DE
MATERIAU ⟍ S3bis

QUALITE
SUFFISANTE

NON

OUI

S4 ⟍ OPTIMISATION DE LA
COMBINAISON EN MODE
NON « ZOOM »

# FIG. 1

FIG. 2

FIG. 3

FIG. 4

FIG. 5

# FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8107705 B
- FR 2964756
- FR 3029053

**Littérature non-brevet citée dans la description**

- **J. ROLLIN** ; **F. DIAZ** ; **C. FONTAINE** ; **B. LOISEAUX** ; **M.-S. L. LEE** ; **C. CLIENTI** ; **F. LEMONNIER** ; **X. ZHANG** ; **L. CALVEZ**. New solutions and technologies for uncooled infrared imaging. *SPIE 2013 Defense and Security Sensing. Baltimore*
- **M.D. ROBINSON et al.** Joint digital-optical design of imaging systems for greyscale objects. *International Society for Optical Engineering*, vol. 7100, 710011-710020
- **EDWARD R. DOWSKI JR** ; **ROBERT H. CORMACKA** ; **SCOTT D. SARAMAB**. Wavefront Coding: jointly optimized optical and digital imaging systems. *SPIE*
- **SHAY ELMALEM** ; **EMANUEL MAROM**. Infrared Imaging Passive Thermal Compensation Via a Simple Mask. *Romanian Reports in Physics*, 2013, vol. 65 (3), 700-710
- **GONZALO MUYO** ; **ANDREW R. HARVEY**. Wavefront Coding for Athermalization of Infrared Imaging Systems. *Proc. Of SPIE*, vol. 5612
- **M.-A. BURCKLEN et al.** Conception conjointe de l'optique et du traitement d'image appliquée à l'athermalisation d'un objectif infrarouge. *Journées JIONC 2016. 3° journée thématique du Club Calcul Optique*, 2016
- Joint digital-optical design of imaging systems for grayscale objects. **M. DIRK ROBINSON** ; **DAVID G. STORK**. Proc. Of the 2008 SPIE European Optical Design Conference. Site de la Société Ricoh Innovations, 2008
- **J. ROLLIN** ; **F. DIAZ** ; **C. FONTAINE** ; **B. LOISEAUX** ; **M-.S. L. LEE** ; **C. CLIENTI** ; **F. LEMONNIER** ; **X. ZHANG** ; **L. CALVEZ**. New solutions and technologies for uncooled infrared imaging. *SPIE 2013 Defense and Security Sensing*